Europäisches Patentamt

European Patent Office

Office européen des brevets

(19)

(11) **EP 0 876 764 A2**

(12) **EUROPEAN PATENT APPLICATION**

(43) Date of publication:
**11.11.1998 Bulletin 1998/46**

(51) Int. Cl.$^6$: **A23D 7/00**, A23L 1/05,
A23L 3/08

(21) Application number: **98110268.4**

(22) Date of filing: **23.12.1993**

(84) Designated Contracting States:
**AT BE CH DE DK ES FR GB GR IE IT LI LU MC NL PT SE**

(30) Priority: **28.12.1992 US 997689**

(62) Document number(s) of the earlier application(s) in accordance with Art. 76 EPC:
**93310499.4 / 0 605 217**

(71) Applicant:
**UNIGATE NETHERLANDS B.V.**
**1071 GK Amsterdam (NL)**

(72) Inventors:
• **Buliga, Gregory Samuel**
**Mount Prospect, Illinois 60056 (US)**
• **Miller, Mark Stuart**
**Arlington Heights, Illinois 6004 (US)**
• **Powell, William Francis**
**Old Swan, Liverpool, L13 6QU (GB)**
• **Daniel, Gerard Lis**
**Wheeling, Illinois 60090 (US)**

(74) Representative:
**Eyles, Christopher Thomas**
**W.P. THOMPSON & CO.**
**Celcon House**
**289-293 High Holborn**
**London WC1V 7HU (GB)**

Remarks:
This application was filed on 03 - 06 - 1998 as a divisional application to the application mentioned under INID code 62.

(54) **Fat-free or low fat tablespread**

(57) The non-fat or low fat edible plastic dispersion of the invention which has rheological properties similar to squeezable margarine includes a fat mimetic selected from the group consisting of gelling type maltodextrins and modified starch, a bulking agent selected from the group consisting of non-gelling maltodextrins, polydextrose and corn syrup solids and a texturizing agent which is xanthan gum.

EP 0 876 764 A2

## Description

### Field of the Invention

The present invention relates generally to a non-fat product that has the appearance of margarine and squeezable margarine. In particular, the invention relates to a non-fat product that has the appearance and taste of margarine and squeezable margarine, but has substantially fewer calories and has no fat.

### Background of the Invention

In recent years, there has been a substantial research effort directed to reducing or eliminating the fat in various water continuous food products, such as ice cream, pourable dressings, salad dressing, mayonnaise and cheese. To produce these fat reduced products, many fat mimetic materials have been developed.

U.S. Patent No. 4,734,287 to Singer, et al. describes a proteinaceous, water-dispersible macrocolloid comprising substantially non-aggregated particles of dairy whey protein. U.S. Patent No. 4,911,946 to Singer, et al. discloses a fat substitute which comprises water-dispersable macrocolloid particles having a substantially spheroidal shape and a particle size distribution effective to impart the substantially smooth organoleptic character of an oil-and-water emulsion. The particles are produced by subjecting carbohydrate materials such as quinoa starch, calcium alginate, cross-linked dextran, gellan gum, konjac, mannan, chitin, schizophyllan and chitosan to high shear forces by introducing a carbohydrate solution into a highly turbulent reaction zone. This treatment produces gelled microparticles having the spheroidal shape and size described in this patent. U.S. Patent No. 5,104,674 to Chen, et al. describes fat mimetic materials which are produced by subjecting fibers of a polysaccharide gum and various protein sources to high shear forces to microfragment the particles.

While numerous fat mimetic materials have been produced, such fat mimetic materials are almost universally used in a water continuous product, such as a pourable dressing, mayonnaise or salad dressing. Only recently have attempts been made to produce a non-fat substitute for fat continuous systems, such as butter and margarine. U.S. Patent No. 4,956,193 to Cain, et al. describes a non-fat edible plastic dispersion which is a substitute for butter or margarine. The edible plastic dispersion of the Cain, et al. patent includes at least two condensed phases, at least one of which is continuous. The dispersion includes two gel forming compositions (A) and (B). Gel forming composition A contains 1-8 times the critical concentration of a gelling agent (a) selected from the group consisting of gelatin, kappa carrageenan, iota carrageenan, alginate, agar, gellan, pectin and mixtures thereof. Gel forming composition B also contains 1-8 times the critical concentration of a gelling agent (b) selected from the group consisting of gelling starch, denatured whey protein, denatured bovine serum protein, denatured soy protein, microcrystalline cellulose and mixtures thereof.

The present invention is directed to providing non-fat or low-fat substitutes for fat-containing spreads, such as margarine. The present invention is also directed to providing a non-fat or low-fat substitute for margarine products which are known in the art as being "squeezable"; meaning that the product can be dispensed by squeezing a plastic container containing the viscous margarine. Such products are available in the marketplace today containing high levels of fat of about 64%.

### Summary of the Invention

The non-fat edible plastic dispersion of the invention which has rheological properties similar to solid margarine includes a fat mimetic selected from the group consisting of gelling type maltodextrins and modified starch, a bulking agent selected from the group consisting of non-gelling maltodextrins, polydextrose and low DE corn syrup solids and a texturizing agent which is inulin.

The non-fat edible dispersions of the invention which emulate squeezable margarine include a fat mimetic selected from the group consisting of gelling type maltodextrins and modified starch, a bulking agent selected from the group consisting of non-gelling maltodextrins, polydextrose and low DE corn syrup solids and a particular gum, xanthan gum.

### Detailed Description of the Invention

The fat mimetics useful in both the non-fat margarine type formulation and the non-fat squeezable formulation are selected from the group consisting of gelling type maltodextrins and starch modified by acid hydrolysis. An example of a gelling type maltodextrin is marketed under the tradename Paselli™ by the Avebe Company of the Netherlands. Paselli™ is a potato starch enzymatically modified to produce a maltodextrin having a very low DE, below 5. An example of a starch modified by acid hydrolysis is Stellar™, manufactured by A.E. Staley Company. Stellar™ is made by sequential acid hydrolysis and fractionation of granular amylose-amylopectin starch materials. The DE of Stellar™ is between about 6 to 10. The fat mimetic is used in the spreadable margarine type formulation of the present invention at a level of from about 3.5% to about 8% and in the squeezable margarine formulation at a level of from about 5% to about 10%. All percentages used herein are by weight based on the non-fat margarine product unless otherwise indicated.

The bulking agents useful for both the non-fat margarine type product and the non-fat squeezable product are selected from the group consisting of non-gelling maltodextrins, polydextrose and corn syrup solids having a DE of from about 24 to about 42. The bulking agent is present in the non-fat spreadable margarine product at a level of from about 0 to about 5%. That is, the bulking agent is optional in the non-fat spreadable margarine product. If used in the non-fat spreadable margarine, the bulking agent is present at a level of from about 1% to about 5%. The bulking agent is present in the non-fat squeezable margarine product at a level of from about 5% to about 10%.

Inulin is present in the non-fat spreadable margarine product at a level of from about 15% to about 50%. At levels above about 23%, however, the inulin imparts a sweet taste which may be undesirable in some products. The inulin is functional to impart the desired properties of the non-fat margarine substitute of the present invention without any modifying components. In an important embodiment of the present invention, it has been determined that the level of inulin can be lowered to within the range of between about 10% to 23% if calcium citrate is added to the formulation. The calcium citrate utilized is preferably of the type described in U.S. Patent No. 5,149,552, which issued on September 22, 1992. The calcium citrate of this patent has the formula: $Ca_n(C_6H_5O_7)_2$; wherein n is a value from 2.5 to 2.95. Inulin is not required in the non-fat squeezable margarine. The calcium citrate, if used, is present at a level of from about 0.75% to about 3%.

Inulin is a polysaccharide derived from various plant tubers, such as dahlia, jerusalem artichokes and chicory. Inulin is a polysaccharide of fructose units with a molecular weight of about 5,000. The molecular weight of inulin is dependent upon its source.

A gum is used in the non-fat squeezable margarine, but is optional in the non-fat spreadable margarine. The gum is present at a level of from about 0.1% to about 2.0%, preferably from about 0.4% to about 1.75%. The gum may be selected from any of the food grade gums, such as xanthan gum, guar gum, gum acacia, alginates, carrageenans, pectins and gelatin. The preferred gum is xanthan gum.

The non-fat margarine and squeezable margarine of the present invention also contain salt at a level of from about 1.0% to about 2.5%. The formulations may also contain vitamins, preservatives, flavoring components and coloring components.

While a typical spreadable and squeezable margarine type texture and flavor can be attained without the presence of any fat, fats and oils can be included in the formulations at levels up to about 15%, if desired. Suitable fats include butterfat, vegetable oils and flavored oils known as butter oils. If used, the fat and oil is present at a level of from about 0.5% to about 15%.

In the manufacture of the non-fat spreadable margarine product, a salt solution is first prepared in a holding tank. The preservatives used are also combined with the salt in the salt solution. In general, the salt solution will contain from about 1% to about 5% salt. The salt solution is pumped to a second tank where it is mixed with the fat mimetic, the bulking agent, if used, the inulin and any flavors and colorants. The salt solution and other components are metered into the batch mix tank at levels sufficient to provide the desired levels in the finished product.

After being combined in the batch mix tank, the non-fat spreadable formulation is pumped to a high pressure homogenizer, such as a Rannie homogenizer. It has been determined that the non-fat margarine product must be processed at a pressure above 6,000 psi (413.69 bar) to obtain the rheological properties desired in the finished product. Homogenization pressures of from about 8,000 psi to about 11,000 psi (about 551.58 bar to about 758.42 bar) are desirable. The non-fat margarine product after being homogenized is transferred to the holding tank. Since substantial heat is developed during processing through the high pressure homogenization apparatus, the formulation is then pumped through cooling heat exchangers prior to being packaged at a temperature of 60°F (15.6°C) to provide a non-fat spreadable margarine after a period of refrigerated storage of about 24 hours.

The non-fat squeezable margarine is prepared by a different method. The fat mimetic is first placed into solution and heated to a temperature of about 190°F (about 87.8°C) to activate the fat mimetic. The fat mimetic is then held in a tank for subsequent formulation. The xanthan gum and bulking agent are mixed in a second tank and held for use in preparing the formulation. A salt solution is prepared in a third tank and is held for preparing the formulation. The three mixtures are proportioned into a fourth tank in proportions sufficient to prepare the final formulation. The colors and flavors are metered into the fourth tank in suitable amounts. Thereafter, the mixture is processed through a high shear mixer, such as a Pentax™ mixer, which is a horizontal rotating pin type mixer. It should be understood that high shear mixing is to be distinguished from high shear homogenization. High shear homogenization imparts much more shear force than does high shear mixing. The mixture is then transferred to a holding tank from which it is pumped to a cooling heat exchange apparatus prior to being packaged at a temperature of 60°F (15.6°C). The non-fat squeezable margarine product is then held at refrigeration temperatures for a period of between about 10 and about 21 days prior to developing the desired rheological properties similar to that of spreadable margarine.

The following examples further illustrate various features of the invention, but are intended to in no way limit the scope of the invention, which is set forth in the appended claims.

Example 1

A non-fat spreadable margarine type product was prepared from the components set forth in Table 1.

Table 1

| Ingredients | Percentages |
|---|---|
| Water | 70.1755% |
| Inulin | 20.0000% |
| Stellar™ modified starch | 5.0000% |
| Calcium Citrate | 1.5000% |
| Vitamin A (Type 250-S) | 0.0148% |
| Salt (Sodium Chloride) | 2.0000% |
| Sodium Benzoate | 0.0500% |
| Potassium Sorbate | 0.0500% |
| Calcium Disodium EDTA | 0.0075% |
| Lactic Acid (50%) | 0.2500% |
| Titanium Dioxide ($TiO_2$) | 0.1000% |
| Yellow #5 | 0.0016% |
| Yellow #6 | 0.0006% |
| Mouthfeel (MV04) | 0.1500% |
| Butter Flavor | 0.7000% |
| TOTAL | 100.0000% |

Table 2

| Ingredients | Percentages |
|---|---|
| Water | 79.3685% |
| Paselli SA2™ gelling maltodextrin | 8.0000% |
| Lodex 15™ non-gelling maltodextrin | 8.5000% |
| Xanthan gum | 0.5000% |
| Vitamin A | 0.0148% |
| Salt | 2.0000% |
| Sodium Benzoate | 0.0500% |
| Potassium Sorbate | 0.5000% |
| Calcium Disodium EDTA | 0.0075% |
| Lactic Acid (50%) | 0.1570% |
| Yellow #5 | 0.0016% |
| Yellow #6 | 0.0006% |
| Sucrose | 0.5000% |
| Mouthfeel (MVO4) | 0.1500% |
| Butter Flavor | 0.7000% |
| TOTAL | 100.0000% |

The non-fat spreadable margarine was prepared by combining 15% of the water with the salt, the potassium sorbate, the sodium benzoate and the calcium disodium EDTA in a holding tank to provide a salt solution. The salt solution was maintained at a temperature of 120°F (48.9°C). The salt solution was metered into a second tank along with the inulin, the Stellar™, the flavor and color components and the remaining water in a batch mix tank. The mixture was pumped through a Rannie homogenizer and was homogenized at a pressure of 11,000 psi (758.42 bar). The formulation emerged from the Rannie homogenizer at a temperature of 150°F (65.6°C). The formulation was transferred to a holding tank and was pumped through cooling heat exchangers to reduce the temperature to 60°F (15.6°C) for packaging. The spreadable margarine formulation was held at a refrigeration temperature of 40°F (4.4°C) for 1 day to attain the desired rheological properties.

Example 2

A non-fat squeezable type margarine product was prepared from the formulation set forth hereinbelow in Table 2.

The non-fat squeezable margarine was prepared as follows: The Paselli SA2™ gelling type maltodextrin was added to a mixing tank along with 30% of the water. The mixture was stirred and heated to a temperature of 190°F (87.8°C) until required for use. The xanthan gum and non-gelling maltodextrin were added to a second holding tank with 25% of the water and were stirred to provide a mixture. The salt, potassium sorbate, sodium benzoate and calcium disodium EDTA were added to a third mixing tank with the remaining water and were stirred to provide a solution. The Paselli SA™ mixture, the xanthan gum mixture and the salt solution were proportioned to a fourth mixing tank where the flavors and colorants were added. The mixture was then processed through a Pentax™ high shear mixer and transferred to a holding tank. The mixture was transferred through a cooling heat exchanger to provide a temperature of 60°F (15.6°C) and was packaged into squeezable margarine type containers. The containers were held at refrigeration temperatures for 15 days to provide the desired rheological properties.

**Claims**

1. A non-fat or low fat squeezable margarine which contains no more than 15% by weight of fat and which comprises:

(a) a fat mimetic selected from gelling type maltodextrins and starch modified by hydrolysis to remove amorphous regions therefrom,

(b) from 5% to 10% by weight of a bulking agent selected from non-gelling maltodextrins, polydextrose and corn syrup solids,

(c) from 0.1% to 2.0% by weight of xanthan gum, and

(d) water.

2. A margarine according to claim 1, wherein said fat mimetic is present at a level of from 5% to 10%.

3. A margarine according to any one of claims 1 to 3, wherein said margarine also comprises salt at a level of from 1.0% to 2.5%.

4. A margarine according to any one of claims 1 to 4, which also comprises from 0.5% to 15% of a fat or oil.